Europäisches Patentamt

European Patent Office

Office européen des brevets

(19)

(11) Veröffentlichungsnummer: **0 195 759**

**B1**

(12) **EUROPÄISCHE PATENTSCHRIFT**

(45) Veröffentlichungstag der Patentschrift: **04.04.90**

(51) Int. Cl.⁵: **B 23 K 9/28**

(21) Anmeldenummer: **86850044.8**

(22) Anmeldetag: **12.02.86**

(54) Kontaktspitze für Schweisselektrode.

(30) Priorität: **15.02.85 SE 8500714**

(43) Veröffentlichungstag der Anmeldung:
**24.09.86 Patentblatt 86/39**

(45) Bekanntmachung des Hinweises auf die
Patenterteilung:
**04.04.90 Patentblatt 90/14**

(84) Benannte Vertragsstaaten:
**AT BE CH DE FR GB IT LI LU NL SE**

(56) Entgegenhaltungen:
**DE-B-1 197 528**
**FR-A-1 476 227**
**FR-A-2 270 770**
**US-A-1 959 180**
**US-A-3 108 180**
**US-A-3 142 746**

(73) Patentinhaber: **ESAB Aktiebolag**
**Box 8004 Herkulesgatan 72**
**S-402 77 Göteborg (SE)**

(72) Erfinder: **Nilsson, Anders**
**Snavlunda**
**S-690 50 Vretstorp (SE)**
Erfinder: **Nordqvist, Rolf**
**Radjurstigen 9**
**S-710 11 Svarta (SE)**

(74) Vertreter: **Frisch, Kurt**
**c/o ESAB AB Box 8004**
**S-402 77 Göteborg (SE)**

EP 0 195 759 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung bezieht sich auf eine Kontaktspitze für die Stromzufuhr an eine Schweißelektrode. Deartige Kontaktspitzen werden gewöhnlich in Schweißgeräten, wie z.B. Schweißbrennern, verwendet. In den Kontaktspitzen wird der Schweißstrom auf die Schweißelektrode, beispielsweise eine massive Drahtelektrode oder eine pulvergefüllte Röhrchenelektrode, überführt, die durch die Kontaktspitze vorgeschoben wird.

Bekannte Kontakspitzen haben die Form eines Rofres, dessen Innendurchmasser ein wenig größer als der Durchmesser der Elektrode ist. Die Elektrode gleitet während ihrer Passage durch dieses Kontaktrohr an der Rohrwand entlang und erzeugt dadurch den gewünschten Kontakt für die Überführung des Schweißstromes vom Kontaktrohr zur Elektrode. Derartige Kontakttrohre können etwas gebogen sein, um den Kontakt zwischen dem Kontaktrohr und der Elektrode zu verbessern. Die Lage des Kontaktes zwischen dem Kontaktrohr und der Elektrode liegt jedoch nicht fest. Das hat zur Folge, daß sich die vom Schweißstrom durchflossene Länge des Elektroden-abschnittes zwischen deren Spitze und dem Kontakt dauernd ändert. Damit ändert sich wegen des wechselnden Widerstandes des stromdurchflossenen Elektrodenabschnittes auch die Energiezufuhr zur Schweißstelle, was die Schweißqualität nachteilig beeinflußt.

Durch die DE—B 1 197 528 ist ein Kontaktrohr mit einer schraubenförmigen Passage für die Elektrode bekannt geworden. Ein gleichförmiger elektrischer Kontakt zwischen der Elektrode und der Innenwand des Kontaktrohres besteht über die ganze Länge des Kontaktrohres. Die Herstellung derartiger Kontaktrohre, die von einem Rohr mit verhältnis-mäßig kleinem Innendurchmesser ausgeht, ist kompliziert und daher auch kostspielig.

Die Schweißelektroden werden oft mit einem Schutzbelag versehen, um sie gegen Oxydation und Korrosion zu schützen. Außerdem sind die Elektroden der Verstaubung oder anderer Verschmutzung ausgesetzt. Die Elektrode schleppt den Abrieb aus der Elektrodenführung und die Schmutz-partikel mit sich mit. Dieses Material sammelt sich in dem engen Kontaktrohr an und wird dort zu einer dichten Masse zusammengepackt, wodurch der gewünschte gleichmäßige Vorschub der Elektrode gestört wird.

Kontaktspitzen müssen billig sein, da sie sehr rasch abgenützt werden. Die Lebensdauer solcher Kontaktspitzen wird üblicherweise in Stunden angegeben.

Es ist Ziel der Erfindung eine Kontaktspitze zu schaffen, die die Nachteile der vorerwähnten Kontaktrohre überwindet. Die Erfindung zeichnet sich dadurch aus, daß die Kontaktspitze stangenförmig ist und die Stangenoberfläche eine um eine Achse gewundene Schraubenfläche enthält, die als Kontaktfläche für die Elektrode vorgesehen ist, wobei der Abstand A der Schraubenfläche von der Achse definiert ist durch

$$0 < A \leq 0,6 \, D,$$

worin D den Durchmesser der Elektrode darstellt und die Schraubenflüche eine zylindrische Passage mit dem Durchmesser 2A längs der Stangenoberfläche freigibt.

Mit der Kontaktspitze gemäß der Erfindung wird die Rohrform der bekannten Kontaktrohre vermieden. Störungen beim Vorschub der Elektrode infolge mitgeschleppter Partikel treten nicht mehr auf. Derartige Kontaktspitzen sind einfach und billig herzustellen. Ihr besonderer Vorteil ist die allseitige Zugänglichkeit der Kontaktfläche.

Für Werte A < O ist eine zylindrische Passage nicht mehr vorhanden. Die vorgeschobene Elektrode wird bei der Passage der Kontaktspitze beachtlichen Verbiegungen ausgesetzt, die die Friktion zwischen Elektrode und Kontaktfläche merkbar erhöhen, was den Vorschub erschwert. Für Werte A ≥ 0,6 D ist der Kontakt zwischen Elektrode und Kontaktfläche nicht mehr einwandfrei sichergestellt.

Weitere Vorteile der Erfindung können der folgenden Beschreibung und der zugehörigen Zeichnung entnommen werden, die ein Ausführungsbeispiel der Erfindung zeigt.

Fig. 1 zeigt die wesentlichen Einzelheiten einer in Vorderansicht in Richtung der Achse dargestellten erfindungsgemäßen Kontaktspitze.

Fig. 2 zeigt eine Ausführung der Kontaktspitze und Fig. 3,

Fig. 4 und Fig. 5 sind Schnitte längs III—III, IV—IV und V—V in Fig. 2.

Fig. 6 zeigt eine Kontaktspitze gemäß Fig. 2 in einem Mundstück eines Schweißbrenners.

Fig. 7 zeigt eine etwas abgeänderte Kontaktspitze und

Fig. 8, Fig. 9 und Fig. 10 sind Schnitte längs VIII—VIII, IX—IX und X—X in Fig. 7.

Fig. 11 zeigt eine weitere abgeänderte Form der Kontaktspitze gemäß Fig. 2 und Fig. 12 eine Vorderansicht der Fig. 11.

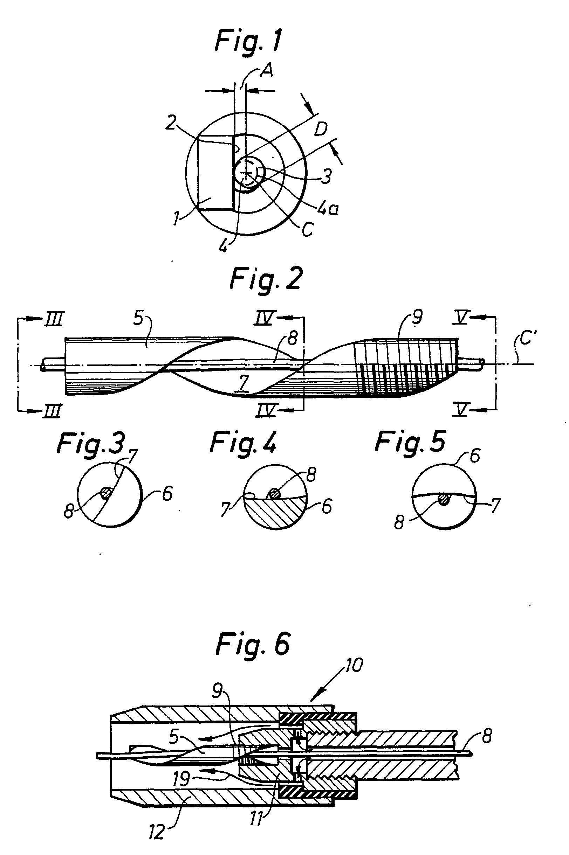

Die Kontaktspitze in Fig. 1 besteht aus einer Stange 1 mit rechteckigem Querschnitt, die zumindest einmal um die Achse gewunden ist. Die Oberfläche 2, die der Achse am nächsten liegt, sowie die anderen Seitenflächen der Stange bilden Schraubenflächen. Die Achse C befindet sich außerhalb der Stange 1 in einem Abstand A von der Oberfläche 2. Eine Elektrode 3 steht in Kontakt mit der Oberfläche 2. Ohne die Elektrode weist die Kontaktspitze eine gerade zylindische Passage 4 auf, die durch den gestrichelten Kreis 4a mit dem Durchmesser 2A angegeben ist. Der Durchmesser D der Elektrode ist somit größer als der Durchmesser der Passage 4. Die Elektrode muß daher bei ihrem Vorschub entlang der Oberfläche 2 theoretisch an der Schraubenlinie der Oberfläche 2 anliegen, die der Achse C am nächsten liegt. Wegen der geometrischen Unvollkommenheiten der Elektrode und der Kontaktspitze berührt die Elektrode die Stange in einer schmalen bandförmigen Kontaktfläche der Stange, die die genannte Schraubenlinie umfaßt und sich axial über die Länge der Stange erstreckt.

Die Biegung der längs der Kontaktspitze vorgeschobenen Elektrode hängt teils von der Lage der Achse C bezüglich der Stange, teils vom Elektrodendurchmesser D, teils von der Steigung der Schraubenfläche und nicht zuletzt von den geometrischen Unvollkommenheiten der Kontaktspitze und der Elektrode ab. Die Elektrode ist üblicherweise nicht vollkommen gerade, wenn sie der Kontaktspitze zugeführt wird.

Es hat sich herausgestellt, daß ein guter Kontakt zwischen der Elektrode und der Kontaktspitze erhalten wird, wenn der Abstand A der genannten Schraubenlinie von der Achse der Kontaktspitze, die auch die Achse der Schraubenlinie ist, folgender Bedingung genügt:

$$A \leq 0,6D$$

Positive Werte won A bedeuten dabei, daß die Achse C außerhalb der Stange gelegen ist, während negative Werte von A bedeuten, daß die Achse C die Stange durchdringt.

Wenn A = 0,5D, dann ist der Durchmesser der Passage 4 gleich groß wie der der Elektrode. Wenn die längs der Kontaktspitze vorgeschobene Elektrode vollkommen gerade ist, wird die Elektrode in Kontaktspitzen, für die die Bedingung 0,5D ≤ A ≤ 0,6 gilt, nur zufällig an der Kontaktfläche der Kontaktspitze anliegen. Es ist festgestellt worden, daß wegen der obengenannten Unvollkommenheiten ein Abstand von bis zu 0,6D gewählt werden kann und trotzdem ein zuverlässiger Kontakt zwischen der Elektrode und der Kontaktspitze etabliert wird. Insbesondere dickere Elektroden mit Durchmessern von einigen Milimetern gleiten einwandfrei an der schraubenförmigen Kontaktfläche. Ein passender Wert von A kann durch Versuche ermittelt werden.

Vorzugsweise liegt A in dem Bereich O ≤ A ≤ 0,5D. Ist der Wert von A negativ, wird die Elektrode während ihres Vorschubs durch die schraubenförmige Kontaktfläche beträchtlich beträchtlich deformiert, was einen sehr hohen Kontaktdruck zur Folge hat. Dies führt zu einem sehr raschen Verschleiß der Kontaktpritze, insbesondere bei Verwendung von dicken Elektroden. Ein solcher Verschleiß kann akzeptiert werden, wenn ein besonders niedriger Kontaktwiderstand zwischen Elektrode und Kontaktspitze gewünscht wird. Je niedriger der Kontaktwiderstand ist, desto geringer sind die Kontaktverluste, die die Erwärmung der Kontaktspitze beeinflussen. Wird der Wert von A nicht größer als 0,5D gewählt, so werden auch Elektroden, die vollkommen gerade der Kontaktspitze zugeführt werden, mit dieser einen einwandfreien Kontakt etablieren.

Eine geringere Deformation der Elektrode längs der Kontaktfläche ergibt einen geringeren Kontaktdruck, aber auch einen geringeren Verschleiß. Es wurde gefunden, daß die Kontaktspitze optimal ausgenutzt wird, wenn der Abstand A folgenden Bedingungen genügt:

$$0,2D < A < 0,5D$$

Die kleineren Weite von A werden für dünnere Elektroden, die größeren für dickere verwendet.

Um die Lebensdauer der Kontaktspitze zu erhöhen, ist es zweckmäßig die Elektrodenspitze mit einer Schichte aus verschleißfestem, leitenden Material zu versehen, beispielsweise Nickel oder einer Nickellegierung. Eine solche Schichte läßt sich auf der Kontaktfläche ohne Schwierigkeiten durch Elektroplattieren oder ein anderes Verfahren aufbringen, da die Oberfläche allseits zugänglich ist.

Eine andere Dimension der Schraubenlinie, die auf den Verschleiß der Kontaktspitze einen großen Einfluß hat, ist die Steigung der Schraubenlinie. Diese soll vorzugsweise nicht geringer als 10D sein. Je geringer die Steigung und je kleiner der Abstand A ist, desto stärker wird die Elektrode bei ihrer Passage der Kontaktspitze gebogen. Der Vorschubwiderstand für die Elektrode wird dadurch erhöht und somit auch der Verschleiß der Kontaktspitze.

Weiters ist es vorteilhalf, daß die Länge der Kontaktspitze zumindest einer vollkommenen Drehung der Schraubenlinie um die Achse entspricht. Die Elektrode wird dabei bei der Passage der Kontaktspitze nach allen Richtungen gebogen. Dadurch wird die Elektrode in der Kontaktspitze gerichtet und sie verläßt diese stets in einer bestimmten Richtung, was beispielsweise die genaue Einstellung des Schweißbrenners bezüglich des Arbeitsstückes wesentlich erleichtert.

Die Kontaktspitze in Fig. 2 besteht aus einer Stange 5, die schraubenförmig um die Achse Ć gewunden ist. Die Stange hat eine im wesentlichen halbzylindrische Form mit einer äußeren zylindrischen Oberfläche 6 und einer etwas konkaven Oberfläche 7. Ein Schweißelektrode 8 wird längs der konkaven Oberfläche 7 vorgeschoben und steht in Kontakt mit dieser. Die Kontaktspitze in Fig. 2 ist derart dimensioniert, daß der Abstand zwischen der Schraubenlinie, die der Achse C' am nächsten ist, größer als Null ist. Die Achse C' befindet sich daher außerhalb der Stange. Außerdem ist der Abstand A kleiner als der Radius der Elektrode, die somit gezwungen ist, während der Passage der Kontaktspitze eine schraubenförmige Vorschubbewegung auszuführen, wie dies den Fig. 2 bis 5 entnommen werden kann.

Staub und anderes Material, das von der Elektrode durch den Elektrodenleiter zur Kontaktspitze mitgeschleppt wird, fällt aus der Kontaktspitze heraus und stört nicht den Vorschub der Elektrode im Bereich der Kontaktspitze.

Die Kontaktspitze ist an ihrem hinteren Ende mit einem Gewinde 9 versehen, mit dem sie in einem entsprechenden Halter 11 eines mit einem Gasmundstück 12 versehenen Schweißbrenners 10 (Fig. 6) befestigt ist.

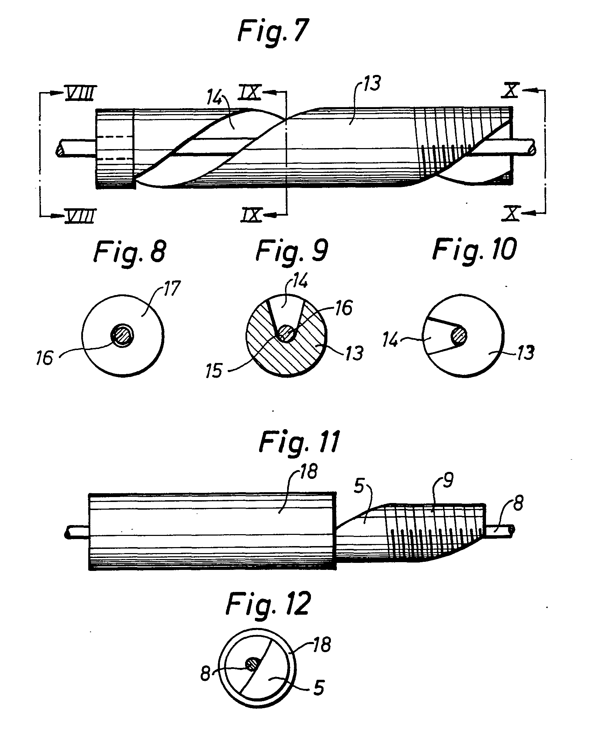

Eine etwas modifizierte Kontaktspitze in Fig. 7 besteht aus einer Stange 13, die mit einer V-förmigen, schraubenförmigen Nut 14 für eine Elektrode 16 versehen ist. Die Nut hat einen gerundeten Nutengrund 15, dessen Krümmungsradius größer ist als der Radius der Elektrode. Die Elektrode gleitet entlang dem Nutengrund, wie dies in Fig. 9 und 10 dargestellt ist.

Aufgrund des guten Kontaktes zwischen der Elektrode und der schraubenförmigen Kontaktfläche ist der Kontaktwiderstand klein und die Erwärmung der Kontaktspitze so gering, daß sich Schweißspritzer auf der mäßig warmen Kontaktspitze nicht festsetzen können. Well allerdings mit großen Schweißspritzerverlusten gerechnet werden muß, kann es vorteilhaft sein, an der Vorderseite der Kontaktspitze ein Mundstück 17 anzubringen, das die Kontaktspitze im wesentlichen vor den Schweisspritzern schützt und zudem gewährleistet, daß die Elektrode aus dem Mundstück in einer bestimmten Richtung austritt.

Die Kontaktspitze in Fig. 11 und 12, die der Kontaktspitze in Fig. 2 entspricht, ist von einer Hülse 18 umgeben. In einigen Fällen kann die Strömung des Schutzgases, die die Kontaktspitze umgibt — wie es durch die Pfeile 19 in Fig. 6 angedeutet ist — durch die schraubenförmige Oberfläche der Kontaktspitze gestört werden. Da die Strömungsgeschwindigkeit des Gases durch das Mundstück verhältnismäßig gering ist, können derartige Störungen normalerweise vernachlässigt werden, da sie nur in einem sehr geringern Maße auftreten. Die Hülse ist daher nur zu verwenden, wenn besonders hohe Anforderungen an einen ungestörten Gasschutz gestellt werden. Soferne die Kontaktspitze mit einer Verschleißschichte versehen werden soll, wird diese angebracht, bevor die Spitze in die Hülse eingeschloben wird.

Die erfindungsmäßigen Kontaktspitzen können auf verschiedene Weise hergestellt werden. Es ist z.B. naheliegend diese durch Verdrehung einer ursprünglich geraden Stange um eine Achse herzustellen, die sich im Abstand A von der Stangenoberfläche befindet. Gewisse Probleme können jedoch entstehen, wenn das Material, das überlicherweise eine harte Kupferlegierung ist, auf diese Weise nur schwierig zu deformieren ist. Es ist aber auch möglich solche Kontaktspitzen durch Strangpressen oder Stranggießen herzustellen. Weiters ist es denkbar entsprechend geformtes stangenförmiges Ausgangsmaterial derart zu bearbeiten, daß die gewünschte schraubenförmige Kontaktfläche erhalten wird. Beispielsweise können Kontaktspitzen entsprechend Fig. 7 ohne das zusätzliche Mundstück 17 in ähnlicher Weise wie Spiralbohrer hergestellt werden.

## Patentansprüche

1. Kontaktspitze für die Stromzufuhr an eine Schweißelektrode, dadurch gekennzeichnet, daß die Kontaktspitze stangenförmig ist, und die Stangenoberfläche eine um eine Achse gewundene Schraubenfläche enthält, die als Kontaktfläche für die Elektrode vorgesehen ist, wobei der Abstand A der Schraubenfläche von der Achse definiert ist durch

$$O < A \leq 0,6D$$

worin D den Durchmesser der Elektrode darstellt, und die Schraubenfläche eine zylindrische Passage mit dem Durchmesser 2A längs der Stangenoberfläche freigibt.

2. Kontaktspitze nach Patentanspruch 1, dadurch gekennzeichnet, daß der Abstand A definiert ist durch

$$0,2D < A \leq 0,6D$$

3. Kontaktspitze nach Patentanspruch 1 oder 2, dadurch gekennzeichnet, daß die Achse mit der Stangenachse zusammenfällt.

4. Kontaktspitze nach einem der Patentansprüche 1 bis 3, dadurch gekennzeichnet, daß die Steigung der Schraubenfläche zumindest 10D ist.

5. Kontaktspitze nach einem der Patentansprüche 1 bis 4, dadurch gekennzeichnet, daß die axiale Länge der Schraubenfläche mindestens einer vollständigen Drehung der Fläche um die Achse entspricht.

6. Kontaktspitze nach einem der Patentansprüche 1 bis 5, dadurch gekennzeichnet, daß die Schraubenfläche mit einer Lage aus widerstandsfähigen, leitendem Material beschichtet ist.

7. Kontaktspitze nach Patentanspruch 6, dadurch gekennzeichnet, daß die Lage aus Nickel oder einer Nickellegierung besteht.

8. Kontaktspitze nach einem der Patentansprüche 1 bis 7, dadurch gekennzeichnet, daß am vorderen Ende der Kontaktspitze ein Führungsmundstück für die Elektrode angebracht ist.

9. Kontaktspitze nach einem der Patentansprüche 1 bis 8, dadurch gekennzeichnet, daß die Kontaktspitze auf einem Teil ihrer Länge von einer Hülse umgeben ist.

## Revendications

1. Extrémité de contact pour amener le courant à une électrode de soudage, caractérisée en ce qu'elle est constituée par un bâtonnet qui présente une face enroulée en hélice autour d'un axe pour servir de surface de contact avec l'électrode, cette face enroulée en hélice étant écartée d'une distance A par rapport à l'axe telle que

$$O < A \leq 0,6 D$$

D étant le diamètre de l'électrode, et la surface enroulée en hélice définissant le long de la face correspondante du bâtonnet un passage cylindrique de diamètre 2 A.

2. Extrémité de contact selon la revendication 1, caractérisée en ce que la distance A est définie par la relation:

$$0,2 D < A \leq 0,6 D$$

3. Extrémité de contact selon l'une des revendications 1 ou 2, caractérisée en ce que l'axe coïncide avec celui du bâtonnet.

4. Extrémité de contact conforme à l'une des revendications 1 à 3, caractérisée en ce que le pas géométrique de la surface enroulée en hélice a une valeur au moins égale à 10 D.

5. Extrémité de contact selon l'une des revendications 1 à 4, caractérisée en ce que la longueur axiale de la surface enroulée en hélice correspond au moins à un tour complet de cette surface autour de son axe d'enroulement.

6. Extrémité de contact selon l'une des revendications 1 à 5, caractérisée en ce que la surface enroulée en hélice est revêtue d'une couche de matière conductrice et résistant à l'usure.

7. Extrémité de contact selon la revendication 6, caractérisée en ce que la couche de revêtement est à base de nickel ou d'un alliage de nickel.

8. Extrémité de contact selon l'une des revendications 1 à 7, caractérisée en ce qu'elle porte sur sa partie antérieure un embout de guidage pour l'électrode.

9. Extrémité de contact selon l'une des revendications 1 à 8, caractérisée en ce qu'elle est entourée par une douille sur une partie de sa longueur.

**Claims**

1. Contact tip for supplying current to a welding electrode, characterized in that the contact tip is rod-shaped, and the rod surface contains a helicoidal face which is wound about an axis and which is provided as a contact face for the electrode, the distance A between the helicoidal face and the axis being defined by

$$0 < A \leq 0.6D,$$

in which D represents the diameter of the electrode, and the helicoidal face leaving open a cylindrical passage of the diameter 2A along the rod surface.

2. Contact tip according to Patent Claim 1, characterized in that the distance A is defined by

$$0.2D < A \leq 0.6D$$

3. Contact tip according to Patent Claim 1 or 2, characterized in that the axis coincides with the rod axis.

4. Contact tip according to one of Patent Claims 1 to 3, characterized in that the pitch of the helicoidal face is at least 10D.

5. Contact tip according to one of Patent Claims 1 to 4, characterized in that the axial length of the helicoidal face corresponds to at least one complete revolution of the face about the axis.

6. Contact tip according to one of Patent Claims 1 to 5, characterized in that the helocoidal face is coated with a layer of resistant conductive material.

7. Contact tip according to Patent Claim 6, characterized in that the layer consists of nickel or of a nickel alloy.

8. Contact tip according to one of Patent Claims 1 to 7, characterized in that a guide nozzle for the electrode is mounted at the front end of the contact tip.

9. Contact tip according to one of Patent Claims 1 to 8, characterized in that the contact tip is surrounded over some of its length by a sleeve.

EP 0 195 759 B1

## Fig. 1

## Fig. 2

## Fig.3   ## Fig. 4   ## Fig. 5

## Fig. 6

1

Fig. 7

Fig. 8

Fig. 9

Fig. 10

Fig. 11

Fig. 12